# EUROPEAN PATENT APPLICATION

(11) **EP 1 198 111 A2**
(43) Date of publication of application: **17.04.2002**
(21) Application number: 01308718.4
(22) Date of filing: 12.10.2001
(51) Int. Cl.: H04M 1/24, H04M 1/74

(54) **Telephonic apparatus and input device for telephonic apparatus**

(30) Priority: 13.10.2000 GB 0025175
(71) Applicant: Tempo Europe Limited, Newport, Gwent NP20 2NN (GB)
(72) Inventor: Kaine, Paul, Court Gardens, St. Arvans NP16 6DZ (GB); Rousse, Olivier, Bradley Stoke, Brisol BS32 8AH (GB)
(74) Representative: Stuart, Ian Alexander

(57) **Abstract**

A telephone, particularly a test telephone, has an input device between its signal processor and its connection to a line, for controlling the connection of the processor to the line in dependence on signals and voltages detected on the line. The device can (a) detect a high voltage (DC3) that would damage the processor, trigger a warning, and prevent connection; and (b) detect an intermediate voltage (DC2), trigger a distinguishable warning, and prevent connection unless manually overridden. It preferably can also detect a digital signal, trigger a distinguishable warning, and prevent connection unless manually overridden. It may also prevent connection if a minimum working voltage (DC1) is not detected.

## Description

The present invention relates to a telephonic apparatus, and to an input device for a telephonic apparatus.

In the present document the term "telephonic apparatus" will be used to refer to any device for sending or receiving along one or more electric cables signals encoding information. It thus includes telephone apparatus (that is to say a device which converts sound signals to and from electrical signals for transmission along telephone cables), as well as, for example, facsimile machines, computer modems and personal computers (PCs) set up to carry out telephony or operations related thereto such as testing. One particular form of telephonic apparatus is known as a "test telephone". This is a telephone adapted for simple releasable connection to telephone cables, for example at a telephone exchange or connection box, to test what signals are being transmitted along the cables. PCs may also be used for this.

A telephonic apparatus generally comprises telephonic circuitry and terminals for connection to the telephone cables. The terminals are electrically connectable to the telephonic circuitry by operating a switch (normally made up of several components) which can be configured to provide either a high or a low impedance. When the telephonic apparatus is not intended to transmit or receive signals via the telephone cables, the switch is configured to substantially remove the electrical connection between the telephonic circuitry and the telephone cables. For example, if the switch is in series with the telephonic circuitry between the terminals, the switch may enter a high impedance mode. Alternatively, if the switch is in parallel with the telephonic circuitry between the terminals, it may enter a low impedance mode. When it is desired to transmit or receive signals, the switch is configured to electrically connect the telephonic circuitry to the terminals (e.g. in the series configuration it becomes low impedance; in the parallel configuration it becomes high impedance).

In the case of a telephone, for example, the switch is usually coupled to the hook on which a hand-held receiver rests, so that the circuitry of the telephone is electrically connected to the telephone cables when the user lifts the receiver from the hook. For this reason, the state in which the telephonic circuitry is electrically connected to the telephone cables is referred to as an "off-hook" state, while the state in which the telephone circuitry is not connected to the telephone cables (due to the switch being open) is referred to as the "on-hook" state.

Conventionally, the voltage of signals transmitted. along telephone cables is of the order of a few volts. However, it is also known to transmit higher voltages along telephone cables to power active circuits deployed in a local distribution network. Furthermore, high voltages may arise on telephone lines by accident, for example if at some location the telephone cables have been inadvertently coupled to a mains supply.

Accordingly, it is known to design the input stages of the telephonic circuitry of a telephonic apparatus to be capable of surviving the application of voltages above the normal working range of the telephonic apparatus, so that when the circuitry is connected to the telephonic cables (e.g. by closing the switch) the telephonic circuitry is not destroyed. However, it is difficult to design telephonic circuitry to tolerate a DC voltage of above about 120V. Thus, if the voltage on the telephone cable is above this range, the circuitry will still be damaged. If, for example, the DC voltage is of the order of 300-500V, the telephonic circuitry will not survive, and will have to be repaired.

Increasingly, telephone cables are being used to transmit digital signals. This may involve relatively high voltages. Digital signals are not detectable on an ordinary telephone or test telephone. Various devices are available for enabling telephone engineers to test a line for the presence of digital signals so that they do not unknowingly disrupt them. Our "DIGALERT 2" test telephones (e.g. the Chesilvale M0400 DigAlert telephone) employ protective circuitry with sensors that (1) check for the presence of digital traffic and (2) determine whether a line carries a DC voltage above a predetermined level, typically 120V. If either determination is positive, the telephonic circuitry is prevented from being electrically connected between the input terminals. There is generally also a sensor to confirm that a minimum necessary DC voltage (typically 5V) is present on the line.

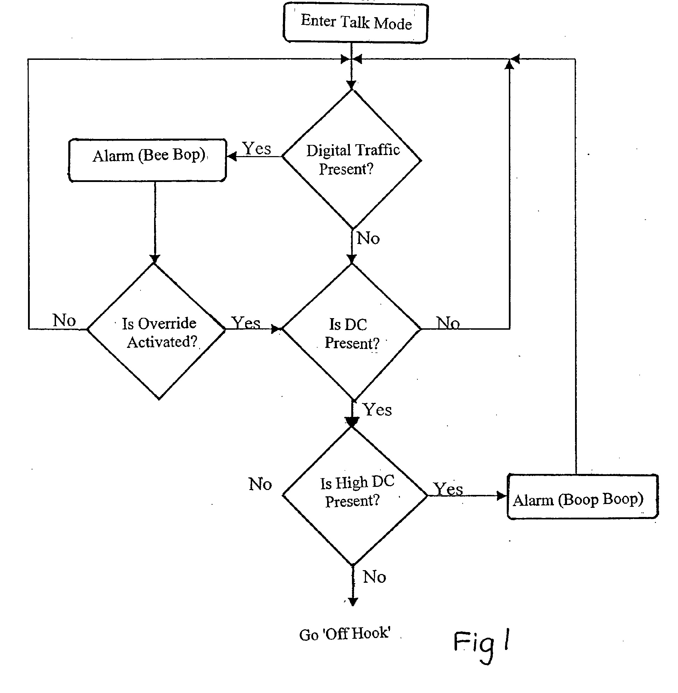

Fig. 1 is a flow diagram of the operation of such protective circuitry in a telephone system.

When a user endeavours to enter talk mode, a digital traffic sensor is interrogated. If this detects digital traffic, a first audible alarm is activated and the telephone is prevented from going off-hook. An override switch is provided, in case the user decides that it is necessary to go off line regardless. In that case, or if no digital traffic is detected, a DC sensor is interrogated, to determine if the minimum necessary voltage level is present. If that determination is positive, a high voltage sensor is interrogated. If that indicates the presence of a high voltage, a second audible alarm, distinguishable from the first, is activated and the telephone is prevented from going off-hook. This generally cannot be overridden, since the high voltage would be liable to cause damage. If no high voltage is detected, then the telephone is allowed to go off-hook.

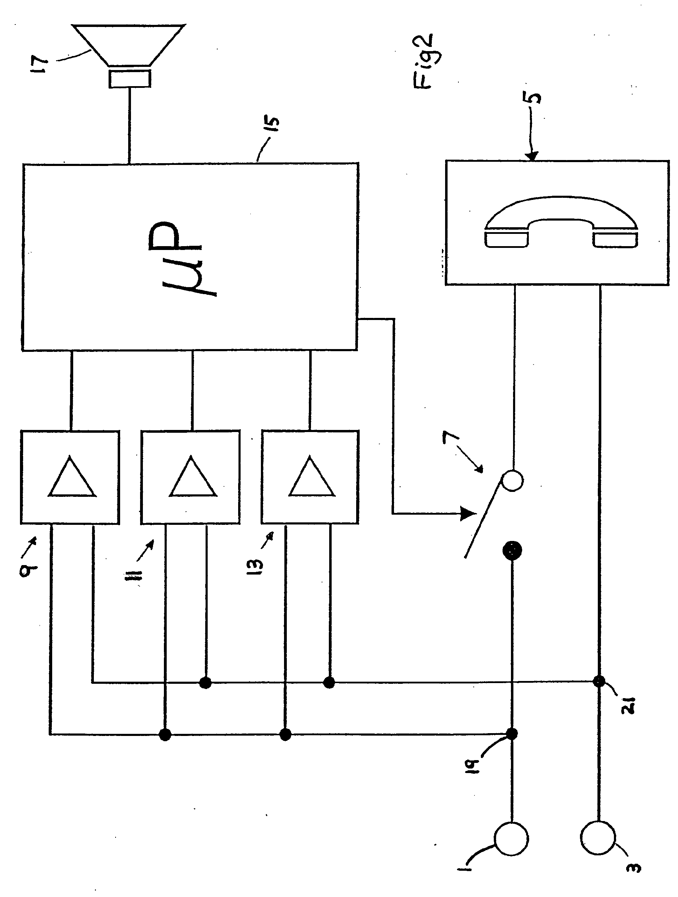

Fig. 2 shows a block diagram of the circuitry of a test telephone including such protective circuitry. The telephone includes input terminals 1, 3 (which are adapted for connection to telephone cables, for example by having suitable clips), conventional telephone circuitry 5 (including a signal processor, which is (or comprises) a sound generator, and, optionally, a component for converting sounds into electrical signals, dialling circuitry, etc.). The telephone circuitry 5 is connected between the input terminals 1, 3 via a switch 7. When the switch is open (the telephone is on-hook) the impedance of the switch 7 is so great that the circuitry 5 is not exposed to voltages between the input terminals 1, 3. However, when the switch 7 is closed (the telephone is off-hook) the circuitry 5 is connected between the input terminals 1, 3. The telephone further includes a sensor 9 for detecting DC voltages between the input terminals 1, 3 above a first predetermined (or programmable) level. It also includes a sensor 11 for detecting that the DC voltage between the input terminals 1, 3 is below a second predetermined (or programmable) level. It further includes a digital signal detector 13 for detecting digital voltage signals between the terminals 1, 3. Upon the sensors 9, 11 detecting that the DC voltage is outside an acceptable range (i.e. there is an under-voltage or an over-voltage), or upon the digital signal detector 13 detecting that a digital signal is present between the input terminals 1, 3, a signal is transmitted to a microcontroller 15. The microcontroller 15 opens a switch 7 so that the telephone circuitry is electrically disconnected from the input terminals 1, 3. The microprocessor 15 further triggers the generation of an alarm tone by a sound generator 17 (which may or may not be the same as a sound generator of the telephone circuitry 5).

The value of 120V for the triggering level was selected to allow for all 'normal' operating values for telephony that are likely to be encountered. In fact, values above 60V are very rarely encountered. They may be found where there are line extenders, where lines are of unusual length. This is relatively common in the USA but is increasingly rare in Europe, especially in Britain.

A line voltage in the range 60-120V might thus be due to a "normal" POTS use, e.g. with line extenders. It is more likely, nowadays, to be associated with digital traffic. For example an ISDN line may carry 90V. This voltage level could be present even when digital traffic was not being transmitted.

We have therefore appreciated that it would be valuable to provide protective circuitry having two levels of high voltage detection : a high voltage level detector for determining a voltage above a 'safe' level (e.g. 120V) and preventing connection of equipment; and a medium voltage level detector for determining voltage above an intermediate level (e.g. 80V). The intermediate level is chosen such that most normal POTS traffic will use voltages below it. If a voltage between the intermediate and high levels is detected, connection of equipment may initially be prevented, but this can be overridden by the user.

Accordingly, in a first aspect, the invention provides a telephonic apparatus comprising:-
two or more terminals for connecting the apparatus to respective electric cables and/or to earth;
a signal processor for processing electrical signals received through or for transmission through the terminals;
a switch for electrically connecting or disconnecting said signal processor between said terminals; and
a first sensor for detecting a voltage above a first level between said terminals;
   wherein upon detection of a voltage between said terminals above said first level, the sensor prevents the switch from connecting said signal processor between said terminals;
a sensor (which may be the same as or different from the first sensor) for detecting a voltage above a second level lower than said first level and providing a detectable indication of such detection;
   wherein upon detection of a voltage between said terminals above said second level, the sensor prevents the switch from connecting said signal processor between said terminals; and
an override switch for permitting such connection when a voltage above said second level but not above said first level is detected.

The telephonic apparatus may be a telephone, in which case the signal processor is or comprises a sound generator for producing audio signals on the basis of the electrical signals. In one form, the telephonic apparatus is a test telephone, and the terminals are preferably adapted for rapid connection and disconnection to telephone cables.

The first and/or second voltage levels may be programmable.

Normally, the telephonic apparatus has two terminals which are connected to respective telephone cables. However, it is possible also to conceive of arrangements in which at least one terminal is connected not to a telephone cable, but to a cable which is connected to earth.

The sensor or sensors may be constituted by a combination of elements, e.g. involving electronic circuitry and a microcontroller which provides an ADC and processing capability, e.g. through firmware. There may be rectification so that a sensor adapted to sense DC voltages can be used to detect AC voltages on line. Thus AC mains on the line could constitute a voltage above said first level.

The sensor or sensors may be constantly sensitive to the presence of a voltage level between the input terminals above the respective detection level (an "over-voltage"). Alternatively, the sensor may have two states, an active state in which it is sensitive to the presence of a voltage level between the input terminals above its detection level, and a passive state in which even if the voltage between the input terminals is above its detection level it does not prevent the switch from connecting the signal processor to the input terminals. The sensor may be triggerable from the passive to the active state by the user. For example, upon the user attempting to operate the switch to connect the signal processor to the terminals, the sensor may be triggered into the active state, so that it can check the voltage between the terminals does not exceed the detection voltage before the signal processor is connected between the electrical cables, and prevent such a connection in the case that such a voltage is present. Alternatively, the sensor may be triggerable from the passive to the active state by connection of the input terminals to the telephone cables. This is particularly advantageous in the case that the telephonic apparatus is a test telephone, because in that case the apparatus can test for the presence of voltages above the detection levels whenever the user connects the test telephone to a new set of telephone cables. For example, if the user is testing a plurality of cables by repeatedly selecting two or more cables from among them and connecting the test telephone to the selected two cables, the sensor can detect the presence of an over-voltage whenever that connection is made.

The sensor may revert from the active state to the passive state spontaneously, for example after being in the active state for a certain time period (which may be programmable by the user or alternatively predetermined).

Upon the sensor detecting the presence of a voltage above its detection level, it may indicate this fact to the user. For example, the telephonic apparatus may include a display, such as an LED, which visually indicates that a voltage above the first level has been detected. Alternatively, or additionally, the telephonic apparatus may generate an audio signal to indicate the presence of a voltage above the first level. For example, if the telephonic apparatus is a telephone, it may include a connection between the sensor and the sound generator of the telephone so that upon detection of an over-voltage the sound generator can be instructed to generate an audio warning tone. This tone may be continuous, but is more preferably intermittent. In the second case, during the intervals between the warning tones the sound generator may generate sounds derived from the telephone cables, for example based on electrical signals superimposed on the high DC voltage. Different sensors preferably provide distinguishable warning signals.

In a preferred form the sensor also has means for detecting the presence of a DC voltage between the terminals. There may be a minimum threshold voltage that must be found before the sensor proceeds to check for an over-voltage. Such an "under-voltage" state may indicate that the electric cables to which the terminals are connected are incorrectly wired.

Preferably, the telephonic apparatus further includes a detector for detecting digital signals (e.g. a digital signal carrier) present in the voltage between the terminals. Suitable circuitry for performing such detection is included within telephone cable testing apparatus sold by Tempo Europe Limited of Newport in South Wales. Other suitable circuitry is shown in US patent 5140614. The option of making the telephonic apparatus sensitive to digital signals is particularly useful if the telephonic apparatus is a test telephone, since in that case an operative using the test telephone can derive additional information concerning the cables he tests. The telephonic apparatus may include an indicator (e.g. visual or audio) that the detector has detected digital signals, and the detector may further be arranged to prevent electrical connection of a signal processor to the telephone cables in the case that the digital signal has been detected.

Like the over-voltage sensor, the digital signal detector may have an active state in which it detects digital signals, and a passive state in which it is sensitive to digital signals. The detector may be triggerable from the passive state to the active state by the user, or by connection of the telephonic apparatus (e.g. test telephone) to the telephone cables. Reversion from the active to the passive state may be after the passage of a time period (either preset or programmable), or upon the user signalling to the detector to revert to the passive state. In the latter case, the user has effectively overridden the digital signal detector. In preferred embodiments, the digital signal detector may be overridden in this way, but the over-voltage sensor cannot be overridden, so that. the user cannot inadvertently expose the telephonic circuitry to a high DC voltage.

In a second aspect, the invention provides an input device for a telephonic apparatus comprising:-
two or more cable terminals for connecting the input device to respective electric cables;
two or more apparatus terminals for connecting the input device to the telephonic apparatus;
a switch for electrically connecting or disconnecting said cable terminals to or from respective said apparatus terminals; and
a first sensor for detecting a DC voltage above a first level between said cable terminals;
   wherein upon detection of a DC voltage between said cable terminals above said first level, the sensor prevents the switch from connecting said cable terminals to said apparatus terminals;
a sensor (which may be the same as or different from the first sensor) for detecting a DC voltage above a second level lower than said first level and providing a detectable indication of such detection;
   wherein upon detection of a DC voltage between said terminals above said second level, the sensor prevents the switch from connecting said signal processor between said terminals; and
an override switch for permitting such connection when a DC voltage above said second level but not above said first level is detected.

The input device of the invention may further have any of the optional features described above in relation to the telephonic apparatus of the invention.

The invention further provides a method of testing a line and connecting a telephonic apparatus thereto employing apparatus of the invention.

These and other objects, features and advantages of the invention will be better appreciated from consideration of the following detailed description read in conjunction with the accompanying drawings.

### BRIEF DESCRIPTION OF THE DRAWINGS

Fig. 1 is a flow diagram of operation of a known form of protective circuitry;
Fig. 2 is a schematic representation of telephonic apparatus including the known circuitry;
Fig. 3 is a flow diagram of operation of protective circuitry embodying the present invention; and
Fig. 4 is a diagrammatic representation of voltage levels relevant to the circuitry.

### DETAILED DESCRIPTION

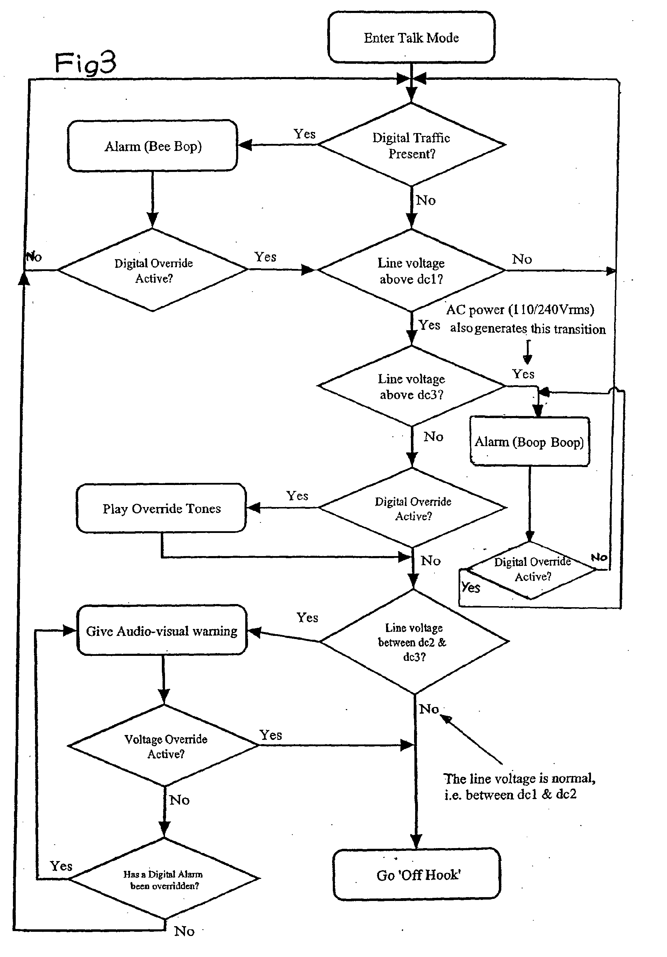

Fig. 3 shows a development of the operating system represented in Fig. 1.

Further boxes are present between "Is high DC present?" and "Go "off hook"". These constitute a further cycle of interrogating a sensor and responding to the result.

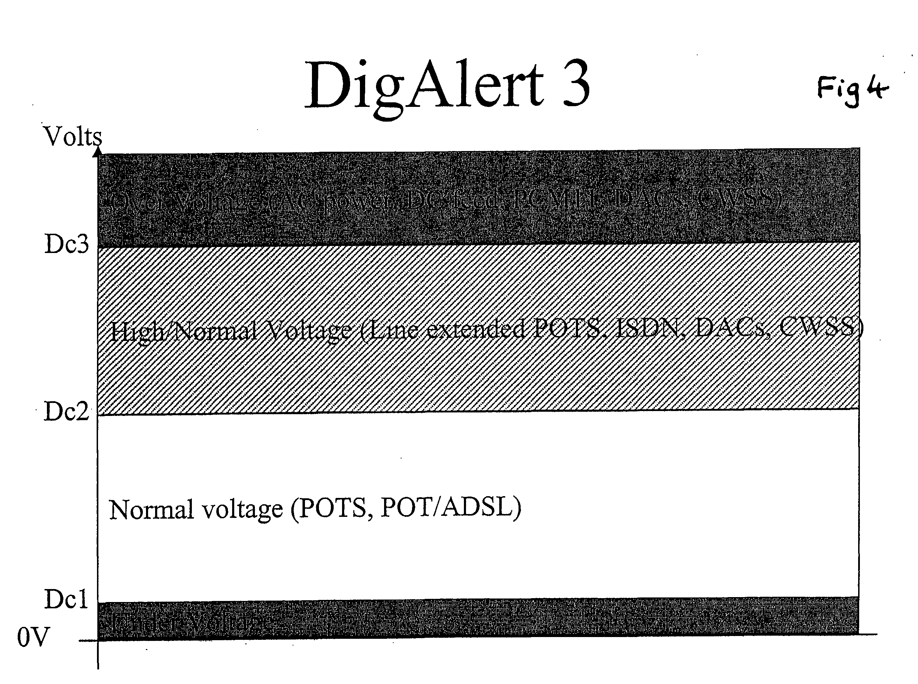

The system now relies on detection of 3 different voltages. (This can be implemented using a single or plural voltage sensing device(s).) As shown in Fig. 4, the lowest voltage DC1 is a minimum working voltage. The normal working voltage for 'ordinary' telephony (e.g. POTS and POT/ADSL) extends to an intermediate voltage level DC2 (e.g. 90V). Above this there is a band in which some systems operate (e.g. line-extended POTS; ISDN; DACs; CWSS). This extends to an upper level, DC3, such that higher voltages might damage equipment and/or be hazardous. Voltages above DC3 may be due to AC power on the line, DC feed, or data transmission systems such as PCM II, DACs or CWSS.

Returning to Fig. 3, when a user of a test telephone which has the system shown in Fig. 3 (which may be implemented by hardware and/or by software) endeavours to enter talk mode, various tests are carried out.

First, there is a test for the presence of digital traffic. If this is detected, a first alarm (having a first distinguishable sound) is actuated. The telephone is prevented from going off line, but this can be overridden. If the override is actuated, or if no digital traffic was detected, the system moves to the second check. This is to determine whether there is line voltage above DC1. If there is not, the operation ceases. If the determination is positive, the system moves to the third check: sensing overvoltage, i.e. voltage above DC3. Detection of overvoltage leads to actuation of a second alarm (with a second distinguishable sound). This alarm is also actuated if AC power is detected on the line.

It can be useful to have information about the nature of the overvoltage. Thus, different paths are chosen depending on whether a digital signal has previously been detected (and the digital override has been actuated).

If overvoltage was not detected, we move on to a further cycle of detection. However a distinction is made as to whether, in order to get this far, it was necessary to use the digital override. If it was, then override tones are played. The final detection is for a voltage above the intermediate value DC2. Thus, this determines the presence of voltage in the intermediate band between DC2 and DC3. If this is detected, a further indicator with a distinguishable output (e.g. an audiovisual signal) is actuated. This can terminate the operation, or this can be overridden. If it is not overridden, then a further determination is made as to whether a digital alarm has been overridden.

Consider the situation of an engineer seeking to connect a test telephone to a line. A relatively sophisticated telephone will let him know whether there is digital traffic present. We have devised a telephone which has a filter such that it is safe to go off-hook on a POTS/ADSL service. But how does he know whether he is connected to such a service, or whether the digital traffic is, for example, ISDN? Using the present system, the following possibilities can be distinguished:
(1) The line is a POTS/ADSL line. When the engineer attempts to go off-hook, the digital alarm is actuated. This is overridden by the engineer. If the voltage is in the normal range (between DC1 and DC2), the telephone can go off-hook. A conversation can be made without disrupting ADSL traffic (assuming the telephone to have a suitable filter for differentiating between POTS and ADSL frequency bands).
(2) The line carries a digital service other than ADSL, such is ISDN or CWSS. When the engineer attempts to go off-hook, the digital alarm is actuated. If the engineer overrides this, the telephone will still not go off-hook, because the line voltage is above normal voltage (DC2). Instead the intermediate level of voltage warning is given. The engineer will appreciate that this is not characteristic of a POTS/ADSL line and he will therefore not override this warning. Instead he will disconnect the telephone and continue to search for the correct pair.

## Claims

1. A telephonic apparatus comprising:
two or more terminals for connecting the apparatus to respective electric cables and/or to earth;
a signal processor for processing electrical signals received through or for transmission through the terminals;
a switch for electrically connecting or disconnecting said signal processor between said terminals; and
a first sensor for detecting a voltage above a first level between said terminals;
wherein upon detection of a voltage between said terminals above said first level, the sensor prevents the switch from connecting said signal processor between said terminals;
a sensor (which may be the same as or different from the first sensor) for detecting a voltage above a second level lower than said first level and providing a detectable indication of such detection;
wherein upon detection of a voltage between said terminals above said second level, the sensor prevents the switch from connecting said signal processor between said terminals; and
an override switch for permitting such connection when a voltage above said second level but not above said first level is detected.

2. Apparatus according to claim 1 which is a telephone, and in which the signal processor is or comprises a sound generator for producing audio signals on the basis of the electrical signals.

3. Apparatus according to claim 1 or 2 in which the telephonic apparatus is a test telephone, and the terminals are adapted for rapid connection and disconnection to telephone cables.

4. An input device for a telephonic apparatus comprising:
two or more cable terminals for connecting the input device to respective electric cables and/or to earth;
two or more apparatus terminals for connecting the input device to the telephonic apparatus;
a switch for electrically connecting or disconnecting said cable terminals to or from respective said apparatus terminals; and
a first sensor for detecting a voltage above a first level between said cable terminals;
wherein upon detection of a voltage between said cable terminals above said first level, the sensor prevents the switch from connecting said cable terminals to said apparatus terminals;
a sensor (which may be the same as or different from the first sensor) for detecting a voltage above a second level lower than said first level and providing a detectable indication of such detection;
wherein upon detection of a voltage between said terminals above said second level, the sensor prevents the switch from connecting said signal processor between said terminals; and
an override switch for permitting such connection when a voltage above said second level but not above said first level is detected.

5. Apparatus according to any of claims 1 to 3 or a device according to claim 4 in which one or both of said first and second voltage levels is programmable.

6. An apparatus or device according to any preceding claim in which the sensor or sensors is/are constantly sensitive to the presence of a voltage level between the input terminals above the respective detection level.

7. An apparatus or device according to any of claims 1 to 4 in which the or at least one said sensor has an active state in which it is sensitive to the presence of a voltage level between the input terminals above its detection level, and a passive state in which even if the voltage between the input terminals is above its detection level it does not prevent the switch from connecting the signal processor to the input terminals.

8. An apparatus or device according to any preceding claim which has means for checking that at least a minimum threshold voltage is present between the terminals and, in the absence of at least said minimum threshold voltage, preventing the switch from connecting said signal processor between the terminals.

9. An apparatus or device according to any preceding claim which further includes means for detecting digital signals present in the voltage between the terminals and, on detecting such signals, preventing the switch from connecting said signal processor between the terminals.

10. An apparatus or device according to claim 9 including a digital signal detector which has an active state in which it is capable of detecting digital signals and preventing switching, and a passive state in which it is not.

11. An apparatus or device according to any preceding claim having warning signal means that provide distinguishable indications of different abnormal states.

12. An apparatus or device according to claim 11 which includes digital signal detection means as defined in claim 9 or claim 10 and wherein the apparatus or device is adapted to carry out a test routine comprising:
(a) testing for the presence of digital signals by means of said digital detection means and, on detecting such signals, generating a first distinguishable indication and, selectively, terminating the test routine or effecting an override;
(b) if no digital signal was detected or if the override was effected, testing for the presence of voltage above said first level (DC3) and, on detecting such an excessive voltage generating a second distinguishable indication;
(c) if no excessive voltage was detected, testing for the presence of voltage above said second level (DC2) and, on detecting such voltage, generating a third distinguishable warning and, selectively, terminating the test routine or effecting an override; and
(d) if no voltage above the second level (DC2) was detected or if the override was effected, causing or enabling said switch to connect said cable terminals to said apparatus.
